# EUROPEAN PATENT APPLICATION

(11) **EP 1 850 263 A1**
(43) Date of publication of application: **31.10.2007**
(21) Application number: 06270041.4
(22) Date of filing: 25.04.2006
(51) Int. Cl.: G06F 21/24

(54) **Metadata processing assurance**

(71) Applicant: Microsoft Corporation, Redmond WA 98052 (US)
(72) Inventor: Geuer-Pollmann, Christian Microsoft, 52072 Aachen (DE)
(74) Representative: Free, Rachel Alder

(57) **Abstract**

Data content is formatted to ensure compliance with a policy when the data content is processed in a processing environment. The data content subject to the policy is obfuscated in a manner such that the processing environment cannot read the data to process it. A key is provided within the policy itself for revealing the data content in the obfuscated content and the policy is attached to the obfuscated content. In this manner, a processing environment that is policy compliant can merely read the policy, identify the key, and extract the data content from the obfuscated data for normal processing. However, a processing environment that is not compliant will not be able to recognize or extract the data content from the obfuscated content and is thus prevented from using the data in a manner that may not be compliant with current policies governing the data.
The data content can be a structured document such as XML.

## Description

### BACKGROUND

Extensible Mark-up Language (XML) is a widely used system for defining data formats in complex documents and data structures for computer processing. XML provides a text-based means to describe and apply a tree-based structure to information. At a base level, all XML information manifests as text, interspersed with markup that indicates the separation of information into a hierarchy of "character data," container-like "elements," and "attributes" of those elements. XML enables authors to define their own markups or tags. As long as an author has the XML definition for a collection of data (often called a "schema") then the author can create a program to reliably process any data formatted according to those rules.

XML was designed with extensibility in mind, i.e., a schema can be extended to include and mark new data types without impacting the ability of a program to recognize previously tagged data. For example, an old application (e.g., Version 1) that processes or otherwise uses data annotated in an XML format should be able to use data created by a newer, Version 2 of the application. This backwards compatibility is achieved by enabling simple structuring of data, so that application Version 1 can ignore parts that are added by application Version 2.

### SUMMARY

Data content is formatted to ensure compliance with a policy when the data content is processed in a processing environment. The data content subject to the policy is obfuscated in a manner such that the processing environment cannot read the data to process it. A key is provided within the policy itself for revealing the data content in the obfuscated content and the policy is attached to the obfuscated content. In this manner, a processing environment that is policy compliant can merely read the policy, identify the key, and extract the data content from the obfuscated data for normal processing. However, a processing environment that is not compliant will not be able to recognize or extract the data content from the obfuscated content and is thus prevented from using the data in a manner that may not be compliant with current policies governing the data.

In one exemplary implementation, data in an extensible mark-up language (XML) document is encrypted to ensure that a policy governing the use of the data is understood by an application processing the data. The policy is set forth in metadata that is attached or appended to the XML document. Additionally, the key for decrypting the data is also included in the metadata. A hint or pointer may be placed in the XML document indicating that the key is in the appended metadata. However, only those applications that are compliant with the policy will understand or recognize the pointer. By encrypting the data, assurance is provided that an older application noncompliant with the policy will not merely ignore new XML tags defining the policy as new tags that for data that is inapplicable to or unnecessary for use by the noncompliant application. Instead, by encrypting the data used by the old application, an error will be returned when the old application attempts to process the XML document indicating that data was not found. However, a policy compliant application will merely find the key in the metadata, decrypt the data, and process the data in the XML document without issue.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Other features, details, utilities, and advantages of the claimed subject matter will be apparent from the following more particular written Detailed Description of various embodiments and implementations as further illustrated in the accompanying drawings and defined in the appended claims.

### DESCRIPTION OF THE DRAWINGS

The present description will be better understood from the following detailed description read in light of the accompanying drawings, wherein:
FIG. 1 is a schematic diagram illustrating concepts underlying a metadata processing assurance schema.
FIG. 2 is a flow diagram of a process for encrypting contents of a document in one implementation of a metadata processing assurance schema.
FIG. 3 is a flow diagram of a process for processing encrypted data in a document upon assurance that policy conditions are met in one implementation of a metadata processing assurance schema.
FIG. 4 is a schematic diagram of an exemplary computing system for implementing a metadata processing assurance schema

### DETAILED DESCRIPTION

As discussed above in the Background, XML is an extensible schema for identifying data. In this respect, data tagged in a XML format should be both extensible to accept new data types and backward compatible. Extensibility means that XML data schemas should be able to accept new data types to define additional types of information added to a document, file, or data structure. Backward compatibility means that applications designed to recognize data types in a particular XML schema should remain able to recognize data marked with particular tags regardless of whether the XML schema has been extended to include additional tags to mark new types of data.

The following is an example of backwards compatibility in an XML schema. Suppose an old application, Version 1, expects data similar to the following:

```
    <Customer>
           <Name>John Doe</Name>
           <Address>
                   <Street number="1 23">Broadway</Street>
                   <ZIP> 12345</ZIP>
           </Address>
    </Customer>
```

In the exemplary schema above, <Customer>, <Name>, <Address>, <Street>, and <ZIP> are all elements that contain other elements or character data. The <Customer> element contains the <Name> and <Address> elements; the <Address> element contains the <Street> and <ZIP> elements. Thus, a hierarchy between elements in the data structure is created. "John Doe" is character data contained in the <Name> element; "Broadway" is character data contained in the <Street> element; and "12345" is character data contained in the <ZIP> element. The <Street> element also contains an attribute called "number" that further contains the character data "123."

A newer version of the application, Version 2, operates on a similar data structure, but adds metadata, for example, a comment field, to the data records as shown below. For the sake of simplicity and clarity herein, original data produced by Version 1 of the application will be referred to as "data" and the added information in Version 2 of the application will be referred to as "metadata".

```
    <Customer>
           <Name>John Doe</Name>
           <Address>
                   <Street number="1 23">Broadway</Street>
                   <ZIP> 12345</ZIP>
                   . . .
           </Address>
           <Comment>Here the new application, Version 2, adds custom
                   comments, such as "Privacy notice: The customer does not
   want to receive advertisements."</Comment>
   </Customer>
```

In accordance with the backward compatibility of XML schemas, Version 1 of the application can be written in a way that the metadata, the additional fields such as <Comment> and related semantics, is ignored when application Version 1 reads and processes data records.

Unfortunately, the nature of XML extensibility becomes a problem if the metadata is supposed to influence the processing behavior of the application. For example, the metadata could be a usage policy describing requirements for handling or restrictions on the surrounding data. In an information rights management (IRM) scenario, it may be disastrous if the processing application, for example, application Version 1, ignores the metadata. It may be appropriate, therefore, to enforce a requirement that the processing application must be aware of the semantics of the metadata before the application is allowed to process the data.

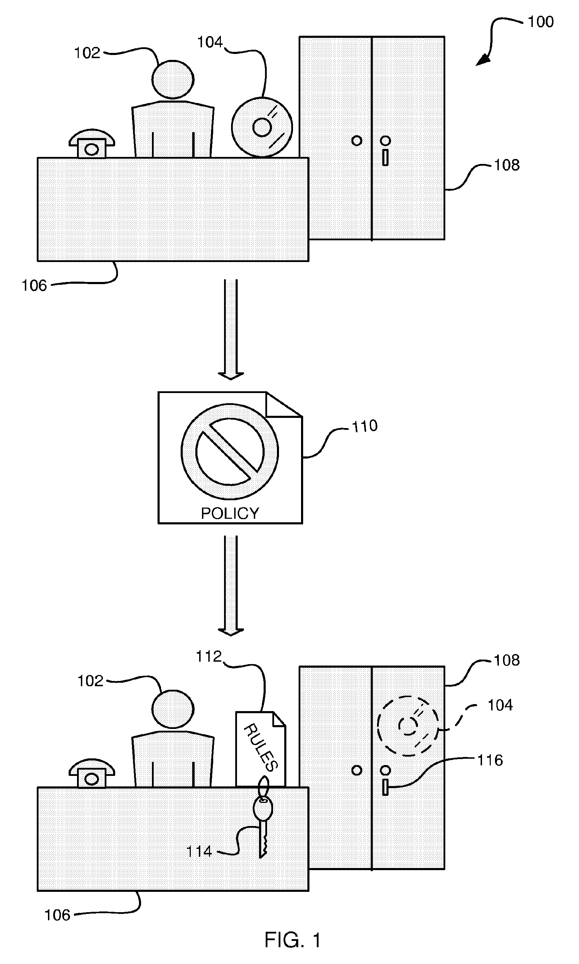

In one implementation, an enforcement solution makes the data "temporarily" unavailable to an application that would otherwise ignore the metadata and embeds the necessary recovery information for the unavailable data within the metadata itself. This implementation may be conceptually understood with reference to the diagram 100 of FIG. 1. Suppose, for example, that a coworker 102 has a compact disk 104 with some type of data available on his desk 106 for use by anyone in the office. In the past, the disk 104 has always been accessible and placed in plain sight on the desk 106.

Now suppose that a new, restrictive policy 110 is implemented with respect to the data stored on the disk 104. For example, the policy 110 may require that the data on the disk 104 be used only in certain ways or for certain purposes. As a result of the policy 110, the coworker 102 removes the disk 104 from his desk 106 and hides the disk 104 in a cabinet 108 which is locked. In this way, the disk 104 is made temporarily unavailable.

In place of the disk 104 on the desk 106, the coworker places an instruction sheet 112 that includes new rules for use of the disk 104 and the data thereon in accordance with the policy 110. The instruction sheet 112 also includes information revealing the new location of the disk 104 now stored in the cabinet 106. A key 114 that unlocks the lock 116 on the cabinet is further attached to the instruction sheet 112. In order to use the key 114 to unlock the lock 116 and open the cabinet 108, a user must agree to abide by the rules set forth on the instruction sheet 112 and thus conform to the policy 110. After reading the instruction sheet 112, a user can decide to ignore the policy 110, thus violating the intent of the coworker 102. But the user cannot plausibly deny knowledge of the instruction sheet 112 and the embedded policy 110 after retrieving the disk 104 from the cabinet 106.

Returning to the exemplary XML schema described above, in order to ensure that the data in the XML file is used only in compliance with a policy, the data may be removed from "plain sight" in the XML file and "locked" away. The metadata may then include information about the policy, directions about how and where the data is hidden, and a key to unlock and reveal the data once there is assurance that there is adherence to the policy.

An exemplary mechanism to obfuscate the data may be to encrypt the data using an encryption scheme, for example, W3C XML Encryption. In this case, the data recovery mechanism may be to retrieve the decryption key from a specific place inside the metadata that could only be found after parsing and processing the metadata. For example, it may be that the only way to process the metadata is to upgrade from Version 1 of the application to Version 2, which, in addition to being able to decrypt the data, is also compliant with the policy.

Upon application of an encryption scheme as described above, the prior example of an XML data file may appear as set forth below.

```
 <Customer xmlns:xenc="http://www.w3.org/2001 /04/xmienc#" (1)
            xmlns:ds=''http://www.w3.org/2000/09/xmldsig#'' (2)
            xmlns:IRM="http://.../"> (3)
 
 
    <xenc:EncryptedData Type="http://www.w3.org/2001 /04/xmlenc#Content"> (4)
        <xenc:EncryptionMethod (5)
           Algorithm="http://www.w3.org/2001 /04/xmlenc#tripledes-cbc"/>
        <ds:KeyInfo> (6)
           <IRM:YouShouldKnowWhereTheKeyls URI="#MetadataToParse78"/> (7)
        </ds:KeyInfo> (8)
        <xenc:CipherData> (9)
           <xenc:CipherValue>DEADBEEF123=</xenc:CipherValue> (10)
        </xenc:CipherData> (11)
    </xenc:EncryptedData> (12)
    <Metadata Id="MetadataToParse78"> (13)
        <Comment>Here the app adds custom comments, such as "Privacy notice: (14)
 The customer does not want to receive advertisements."</Comment>
        <xenc:EncryptedKey> (15)
           <xenc:EncryptionMethod (16)
               Algorithm="http://contoso.com/noEncryption"/>
           <xenc:CipherData> (17)
               <xenc:CipherValue>PlainTextKeyBase64===</xenc:CipherValue> (18)
           </xenc:CipherData> (19)
        </xenc:EncryptedKey> (20)
    </Metadata> (21)
 </Customer> (22)
```

When Version 1 of the application attempts to parse the data in the XML record, the application will create an error because it will not be able to locate the tags and associated data necessary for the application to run. Thus, Version 1 of the application is no longer able to ignore the comment regarding a newly instituted policy with respect to the date in the file. This ensures that the policy is implemented, e.g., Version 1 of the application must be upgraded to Version 2, which adheres to the policy, in order for processing of the data to occur.

The encrypted XML data file initially sets forth the various encryption schemes used to encrypt the data as attributes of the <Customer> element. Line (1) indicates that an XML namespace for encryption of the data is based upon the standards set forth at the indicated uniform resources locator (URL) accessible over the World Wide Web. An XML namespace is a collection of names, referenced by a uniform resource identifier (URI), which are used in XML documents as element types and attribute names. "xmlns:ds" refers to a document specifying XML digital signature processing rules and syntax. Line (2) indicates that an XML namespace for a digital signature and key information, required to access the data is based upon the standards set forth at the indicated URL. Besides integrity and authentication protection, the W3C XML Signature Recommendation defines mechanisms to reference cryptographic material, such as decryption keys. Line (3) indicates that an XML namespace for an example policy required to access the data is based upon the standards set forth at the indicated URL.

Note that in the example XML data file above, the namespaces for encryption and digital signatures are promulgated by standards organizations, while the IRM policy may be promulgated from another source, for example, an owner of the data. In fact, any or all of the namespace references may be promulgated by standards organizations or may be proprietary. Further, greater, fewer, or alternate data obfuscation schemes may be employed.

In the given example, the <Name> and <Address> elements are encrypted as indicated by the <xenc:EncryptedData> element in line (4). The "Type" attribute refers to a URL that identifies the standard for yielding character data from encrypted content. The <xenc:EncryptedData> element does not contain any commonly used reference to the data decryption key. It merely sets forth a proprietary element that may enable newer versions of the application to locate the decryption key material more easily. Line (5) indicates an encryption algorithm is used to encode the data and identifies a URL where the algorithm may be found.

Line (6) defines an element, <ds:Keylnfo>, providing information or a "hint" for locating a content decryption key. Line (7) sets forth an IRM element indicating the location of the key at a particular URI. This is the "hint." In this instance, the URI points to a particular <Metadata> element value (i.e., #MetaDataToParse78) that is found in the same XML data record as described below. In the present example, Version 2 of the application may be programmed to understand the hint and automatically retrieve the decoding information from the metadata section in the same record to immediately move forward with processing, whereas Version 1 would have no knowledge or ability to do the same. Line (8) is merely a closing tag for the <ds:Keyinfo> element.

The <xenc:CipherData> element at line (9) encapsulates the cipher of the actual encrypted data of the record. In this case, the data has been transformed into a plain text cipher with a value indicated by the <xenc:CipherValue> element "DEADBEEF123" set forth at line (10). In order to read the information in the XML file, an application will thus need to be able to transform the cipher back into the original XML elements, attributes, and character data. Lines (11) and (12) are merely closing tags for the <xenc:CipherData> and <xenc:EncryptedData> elements.

The metadata section enclosed by the <Metadata> element beginning at line (1 3) contains the data decryption key referenced in line (7). Now, in addition to the <Comment> element in line (14), which in the ongoing example is the primary metadata introduced by application Version 2, additional information is provided in the metadata to allow an application to decipher the data cipher of line (10). The <xenc:EncryptedKey> element of line (1 5) identifies the enclosed information as the key to unlock the encrypted data.

Note, in this particular example, the content decryption key itself is "encrypted" as indicated by the <xenc:EncryptionMethod> element of line (16) under a proprietary algorithm which is the identity. In other words, the content decryption key itself is not confidentiality protected, but is present in base64-encoded plaintext as indicated in the character data of the <xenc:CipherValue> element of line (18) encapsulated by the <xenc:CipherData> element at line (17). Lines (19), (20), (21), and (22) are merely closing tags for the nested <xenc:CipherData>, <xenc:EncryptedKey>, <Metadata>, and <Customer> elements, respectively. It is important to note down that the <ds:Keyinfo> contents in line (7) refer to the content decryption key in a way that is proprietary to Version 2 of the application. The W3C XML Encryption Recommendation for example defines a standardized way for referring to a content decryption key, but using such a standardized mechanism could enable policy violations.

It is very uncommon when using XML encryption to not also encrypt the content decryption key. However, in this particular usage of XML encryption, the goal is not data confidentiality protection, but obfuscation to enforce a policy that a particular piece of information not be directly processed by an application. Therefore, all of the information necessary to read the data in the XML record, including the key, is provided within the XML record itself. Therefore, an application conforming to the policy can immediately translate the obfuscated data and process the restored data content without the requirement of the user or the application providing a separate confidentiality protection key.

Note that the implementation is not limited to XML or to XML data schemas. The concept of data obfuscation for policy enforcement could be implemented in any arbitrary environment, using any arbitrary languages, and any arbitrary data obfuscation or encryption methodologies. In general, an implementation may be viewed as comprising two processes. A first process involves the creation of the content and metadata, i.e., the addition of metadata to the data and the "wrapping" or encrypting to enforce the metadata parsing process. A second process involves the methodology for unwrapping and reading the wrapped content. The process described in this document is applicable to any system that uses structured data, while XML is only one particular example of a data structuring mechanism. For example, ASN.1 may be another possible data structuring mechanism.

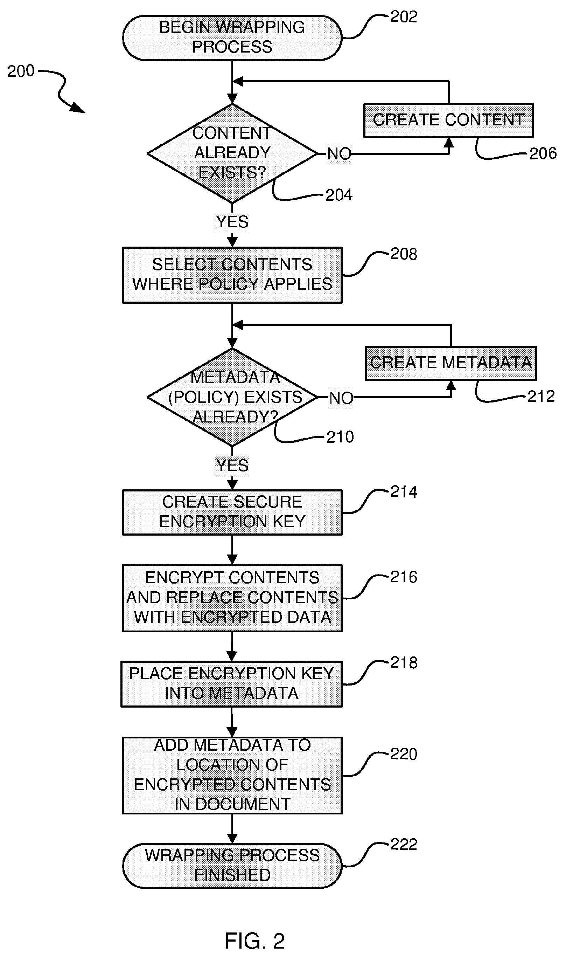

An exemplary content and metadata creation process 200 is depicted in FIG. 2 beginning at a process initiation operation 202. In a first query operation 204, a determination is made as to whether content already exists. For example, if there is already a file of data records to which a policy needs to be retroactively applied, the process will immediately begin to wrap that data content as appropriate. If no content is present, the process moves to a creation operation 206 in which data content may be created. In the context of an XML example, this creation operation would include tagging character data records with appropriate elements or attributes. Once the content is created, the process returns to the first query operation 204.

Once the content has been identified or created, a selection operation 208 selects the content to which a policy to be implemented applies or should be applied. In a second query operation 210, the content is reviewed to determine whether metadata, i.e., the desired policy, has already been applied to the content. If the metadata has not been added to the content, a second creation operation 212 creates the appropriate metadata related to enforce the policy and adds the metadata to the content. Once the metadata is created, the process returns to the second query operation 210.

If the second query operation 210 finds the appropriate metadata, the process 200 begins a series of obfuscation operations. In a third creation operation 214, the process 200 chooses or creates a secure encryption key. Next, in an encryption operation 216, the data content is encrypted and the plain text or other accessible data in the file is replaced with the encrypted data. The process 200 then inserts the encryption key into the metadata in a placement operation 218. Finally, the metadata is added or appended to the encrypted contents in the file or document in an addition operation 220. The content and metadata creation process 200 then terminates at terminating operation 222.

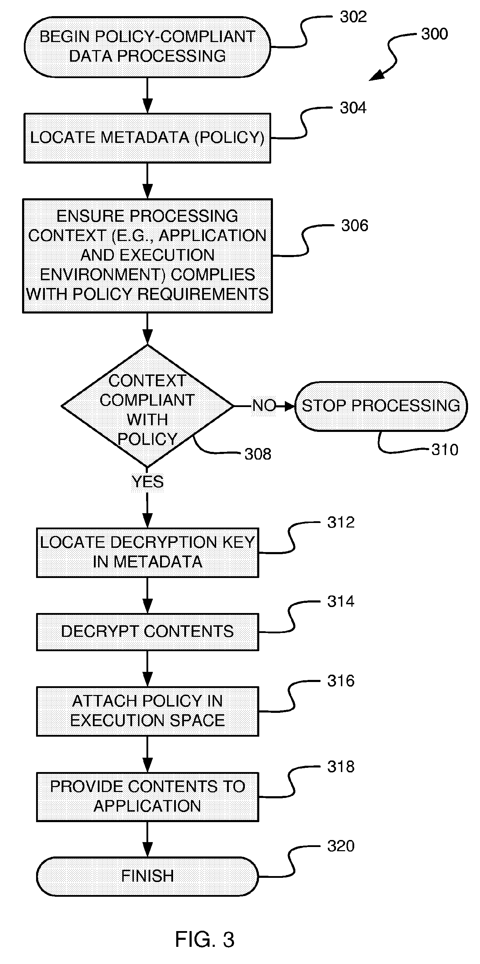

An exemplary data processing compliance process 300 that decrypts and parses content only when the environment is compliant with an imposed policy is depicted in FIG. 3 beginning at initiation operation 302. In a location operation 304, the process 300 examines the content of a document or file to identify the associated metadata, i.e., the policy applicable to the content. Once the particular policy is determined, in an ensuring operation 306 the process 300 next parses the metadata to ensure that the processing context (e.g., the application or the execution environment) complies with the policy.

An enforcement module may perform a query operation 308 to ensure that the execution context of the application processing the data complies with the requested policy. For example, a policy may request that the document is only processed on machines when connected to the corporate network. If the execution environment does not comply with the requested policy, processing is stopped as a function of the application in response to the policy in a suspension operation 310. Alternately, as in the XML example above, if the application is unable to parse the metadata and find the data content for processing, the application will generally return an error and stop running automatically.

If it is determined that the processing context is compliant with the policy, a location operation 312 locates the decryption key in the content and extracts the key from the metadata. The process 300 then uses the key to decrypt the data contents in the file in a decryption operation 314. Information from the metadata may further be attached in an attachment operation 316 to the decrypted data file as appurtenant data, i.e., metadata, in the data structure. In the XML example above, this attachment operation 316 would be manifested by appending the character data from the <Comment> element to the data content.

In an alternate example of a rich execution environment, data objects in memory may have attached metadata to support potential enforcement mechanisms at runtime. For example, a computer operating system may read the metadata associated with data requested from memory by an application instantiated to run on the operating system platform. The operating system, independent of the instantiated application, would thus be aware of a policy associated with the data and would be configured to respect the policy. As part of this configuration, the operating system may further force the instantiated application to follow the policy as well, e.g., if the application did not adhere to the policy, the operating system could terminate the application.

In another example of a programming environment, programming objects, modules, or other discrete application building blocks (hereinafter "objects") in memory or otherwise accessed by a programmer for use within a program being developed may have attached metadata policies to enforce restrictions on use of the objects. Again, the computer operating system may read the metadata associated with objects requested from memory. The operating system, independent of the programming environment, would thus be aware of a policy associated with the data and would be configured to respect the policy. As part of this configuration, the operating system may further force the programming environment to follow the policy as well, e.g., if the object were being used to perform functions that did not adhere to the policy, the operating system could prevent the objects from functioning within the programming environment.

Returning to the process 300, the decrypted content data, enriched with metadata if applicable, are then passed to the application for appropriate processing and use in a providing operation 318. The data processing compliance process 300 then terminates at terminating operation 320.

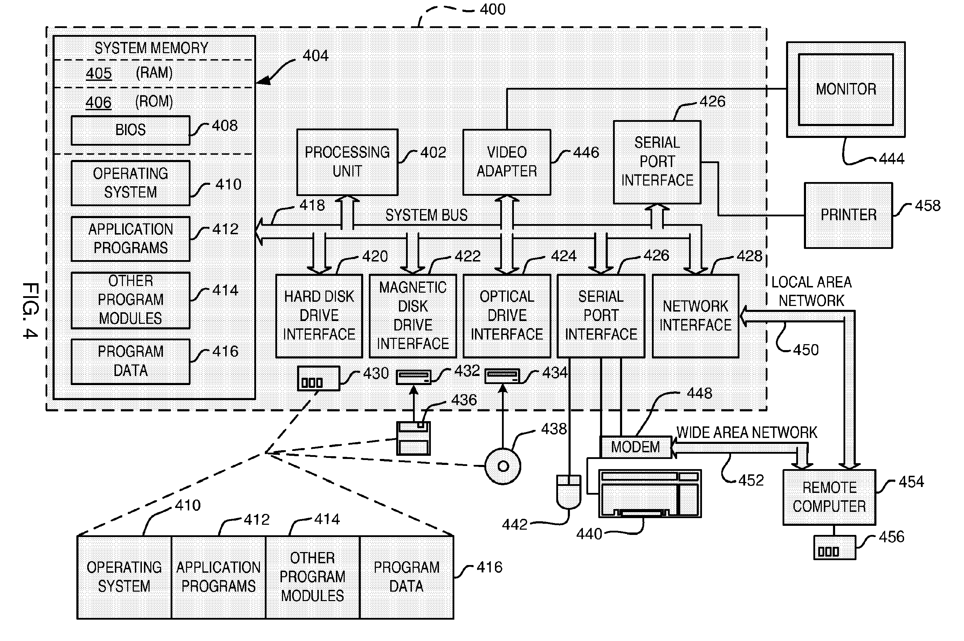

An exemplary hardware and operating environment for implementation of such processes may include a general purpose computing device in the form of a computer 400 as shown in FIG. 4. The computer 400 may include a processing unit 402, a system memory 404, and a system bus 418 that operatively couples various system components, including the system memory 404 to the processing unit 402. There may be only one or there may be more than one processing unit 402, such that the processor of computer 400 comprises a single central processing unit (CPU), or a plurality of processing units, commonly referred to as a parallel processing environment. The computer 400 may be a conventional computer, a distributed computer, or any other type of computer; the invention is not so limited.

The system bus 418 may be any of several types of bus structures including a memory bus or memory controller, a peripheral bus, a switched fabric, point-to-point connections, and a local bus using any of a variety of bus architectures. The system memory 404 may also be referred to as simply the memory, and includes read only memory (ROM) 406 and random access memory (RAM) 405. A basic input/output system (BIOS) 408, containing the basic routines that help to transfer information between elements within the computer 400, such as during start-up, is stored in ROM 406. The computer 400 further includes a hard disk drive 430 for reading from and writing to a hard disk, not shown, a magnetic disk drive 432 for reading from or writing to a removable magnetic disk 436, and an optical disk drive 434 for reading from or writing to a removable optical disk 438 such as a CD ROM or other optical media.

The hard disk drive 430, magnetic disk drive 432, and optical disk drive 434 are connected to the system bus 418 by a hard disk drive interface 420, a magnetic disk drive interface 422, and an optical disk drive interface 424, respectively. The drives and their associated computer-readable media provide nonvolatile storage of computer-readable instructions, data structures, program modules and other data for the computer 400. It should be appreciated by those skilled in the art that any type of computer-readable media that can store data that is accessible by a computer, for example, magnetic cassettes, flash memory cards, digital video disks, RAMs, and ROMs, may be used in the exemplary operating environment.

A number of program modules may be stored on the hard disk 430, magnetic disk 432, optical disk 434, ROM 406, or RAM 405, including an operating system 410, one or more application programs 412, other program modules 414, and program data 416. A user may enter commands and information into the personal computer 400 through input devices such as a keyboard 440 and pointing device 442, for example, a mouse. Other input devices (not shown) may include, for example, a microphone, a joystick, a game pad, a tablet, a touch screen device, a satellite dish, a scanner, a facsimile machine, and a video camera. These and other input devices are often connected to the processing unit 402 through a serial port interface 426 that is coupled to the system bus 418, but may be connected by other interfaces, such as a parallel port, game port, or a universal serial bus (USB).

A monitor 444 or other type of display device is also connected to the system bus 418 via an interface, such as a video adapter 446. In addition to the monitor 444, computers typically include other peripheral output devices, such as a printer 458 and speakers (not shown). These and other output devices are often connected to the processing unit 402 through the serial port interface 426 that is coupled to the system bus 418, but may be connected by other interfaces, such as a parallel port, game port, or a universal serial bus (USB).

The computer 400 may operate in a networked environment using logical connections to one or more remote computers, such as remote computer 454. These logical connections may be achieved by a communication device coupled to or integral with the computer 400; the invention is not limited to a particular type of communications device. The remote computer 454 may be another computer, a server, a router, a network personal computer, a client, a peer device, or other common network node, and typically includes many or all of the elements described above relative to the computer 400, although only a memory storage device 456 has been illustrated in FIG. 4. The logical connections depicted in FIG. 4 include a local-area network (LAN) 450 and a wide-area network (WAN) 452. Such networking environments are commonplace in office networks, enterprise-wide computer networks, intranets and the Internet, which are all types of networks.

When used in a LAN 450 environment, the computer 400 may be connected to the local network 450 through a network interface or adapter 428, which is one type of communications device. When used in a WAN 452 environment, the computer 400 typically includes a modem 448, a network adapter, or any other type of communications device for establishing communications over the wide area network 452. The modem 448, which may be internal or external, is connected to the system bus 418 via the serial port interface 426. In a networked environment, program modules depicted relative to the personal computer 400, or portions thereof, may be stored in a remote memory storage device. It is appreciated that the network connections shown are exemplary and other means of and communications devices for establishing a communications link between the computers may be used.

In an exemplary implementation, the processes described with respect to FIGS. 2 and 3 may be incorporated as part of the operating system 410, application programs 412, or other program modules 414. State description files, object data values, content data (e.g., XML files), and other data may be stored as program data 416.

The technology described herein may be implemented as logical operations and/or modules in one or more systems. The logical operations may be implemented as a sequence of processor-implemented steps executing in one or more computer systems and as interconnected machine or circuit modules within one or more computer systems. Likewise, the descriptions of various component modules may be provided in terms of operations executed or effected by the modules. The resulting implementation is a matter of choice, dependent on the performance requirements of the underlying system implementing the described technology. Accordingly, the logical operations making up the embodiments of the technology described herein are referred to variously as operations, steps, objects, or modules. Furthermore, it should be understood that logical operations may be performed in any order, unless explicitly claimed otherwise or a specific order is inherently necessitated by the claim language.

The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the spirit or scope of this invention. In particular, it should be understand that the described technology may be employed independent of a personal computer. Other embodiments are therefore contemplated. It is intended that all matter contained in the above description and shown in the accompanying drawings shall be interpreted as illustrative only of particular embodiments and not limiting. Changes in detail or structure may be made without departing from the basic elements of the invention as defined in the following claims.

## Claims

1. A method for creating content to ensure policy compliance when processing the content, the method comprising:
selecting content for application of a policy;
obfuscating the selected content;
substituting the selected content with the obfuscated content;
providing a key within the policy for revealing the selected content in the obfuscated content; and
attaching the policy to the obfuscated content.

2. The method of claim 1 further comprising defining the policy.

3. The method of claim 1 further comprising creating the key.

4. The method of claim 1, wherein the obfuscating operation further comprises encrypting the selected content.

5. A computer-readable medium having computer-executable instructions for performing a computer process implementing the method of claim 1.

6. A method for ensuring policy compliance when processing data content, the method comprising:
locating a policy associated with obfuscated content;
ensuring a processing context complies with the policy;
locating a key for revealing readable data content within the obfuscated content;
revealing the data content; and
providing the data content to the processing context.

7. The method of claim 6, wherein the policy is located within metadata associated with the obfuscated content.

8. The method of claim 6, wherein the key is located within the policy.

9. The method of claim 6, wherein the obfuscated content is encrypted content and the revealing operation further comprises decrypting the encrypted content through use of the key.

10. The method of claim 6, wherein the ensuring operation further comprises:
informing an operating system of the policy; and
preventing the processing context from using the data content by control of the processing context by the operating system if the processing context does not comply with the policy.

11. The method of claim 6, wherein the data content comprises a programming object, the processing context comprises a programming environment, and the ensuring operation further comprises:
informing an operating system of the policy; and
preventing use the programming object by control of the programming environment by the operating system if the use of the programming object in the programming environment does not comply with the policy.

12. A computer-readable medium having computer-executable instructions for performing a computer process implementing the method of claim 6.

13. A method for creating a structured document to ensure policy compliance when processing the XML document, the method comprising
selecting data within the structured document for application of a policy; encrypting the selected data; substituting the selected with the encrypted data; providing a key within metadata for transforming the encrypted data into the data; and attaching the metadata to the encrypted data.

14. The method of claim 1 3 further comprising creating the key.

15. The method of claim 13 further comprising including the policy within the metadata.

16. The method of claim 1 5 further comprising including a policy reference element within the structured document that points to the location of the policy within the metadata.

17. The method of claim 1 5 further comprising:
locating the policy within the metadata; and
determining whether a processing context that processes the structured document complies with the policy.

18. The method of claim 17 further comprising terminating the processing context if the processing context is not in compliance with the policy.

19. The method of claim 15 further comprising:
locating the policy within the metadata;
locating the key within the metadata;
decrypting the encrypted data using the key; and
providing the decrypted data to a processing context.

20. A computer-readable medium having computer-executable instructions for performing a computer process implementing the method of claim 13.
